# EUROPÄISCHE PATENTSCHRIFT

(11) **EP 3 252 643 B1**
(45) Veröffentlichungstag und Bekanntmachung des Hinweises auf die Patenterteilung: **18.11.2020**
(21) Anmeldenummer: 17172995.7
(22) Anmeldetag: 21.01.2010
(51) Int. Cl.: G06F 21/32, G06F 21/34, G06F 21/57, G06Q 20/34, G06Q 20/40, G07F 7/10, H04L 29/06, G06F 21/00

(54) **LESEGERÄT FÜR EINE CHIPKARTE UND COMPUTERSYSTEM**
READING DEVICE FOR A CHIP CARD AND COMPUTER SYSTEM
APPAREIL DE LECTURE POUR UNE CARTE À PUCE ET SYSTÈME INFORMATIQUE

(30) Priorität: 26.01.2009 DE 102009000408
(43) Veröffentlichungstag der Anmeldung: 06.12.2017
(62) Teilanmeldung aus: 10700578.7
(73) Patentinhaber: Bundesdruckerei GmbH, 10969 Berlin (DE)
(72) Erfinder: Scholze, Steffen, 10249 Berlin (DE); Nguyen, Dr. Kim, 10437 Berlin (DE)
(74) Vertreter: Richardt Patentanwälte PartG mbB

(56) Entgegenhaltungen:
- DE-A1-102005 059 001
- US-A1- 2006 039 564
- SAVVIDES M ET AL: "Cancelable biometric filters for face recognition", PATTERN RECOGNITION, 2004. ICPR 2004. PROCEEDINGS OF THE 17TH INTERNAT IONAL CONFERENCE ON CAMBRIDGE, UK AUG. 23-26, 2004, PISCATAWAY, NJ, USA,IEEE, Bd. 3, 23. August 2004 (2004-08-23), Seiten 922-925, XP010724811, ISBN: 978-0-7695-2128-2
- Ann Cavoukian ET AL: "Biometric Encryption: A Positive-Sum Technology that Achieves Strong Authentication, Security AND Privacy ABOUT THE AUTHORS", , 14. März 2007 (2007-03-14), XP055401492, Gefunden im Internet: URL:https://pdfs.semanticscholar.org/9744/ 21ad38c326a48ee26a3a5937ad59a0a2df28.pdf [gefunden am 2017-08-28]
- Haiyong Chen ET AL: "Generating Cancelable Fingerprint Template Using Distortion Transformation", , 10. September 2007 (2007-09-10), XP055401804, Gefunden im Internet: URL:https://pdfs.semanticscholar.org/fbba/ 3edb97908d9769587f4617efccaf21712dc3.pdf [gefunden am 2017-08-28]

## Beschreibung

Die vorliegende Patentanmeldung ist eine Teilanmeldung zur Stammanmeldung EP 10 700 578.7, deren Offenbarungsgehalt vollumfänglich zum Gegenstand der vorliegenden Teilanmeldung gemacht wird.

### Beschreibung

Die Erfindung betrifft ein Lesegerät für eine Chipkarte und ein Computersystem. Für die Freischaltung einer Chipkarten-Funktion kann eine zuvorige Benutzeridentifizierung gegenüber der Chipkarte erforderlich sein, wie es aus dem Stand der Technik an sich bekannt ist. Die häufigste Benutzeridentifizierung ist die Eingabe einer geheimen Kennung, welche im Allgemeinen als PIN (Personal Identification Number) bezeichnet wird.

Zur Benutzeridentifizierung wird die PIN von dem Benutzer auf der Tastatur eines Chipkarten-Terminals oder eines Computers, an den ein Chipkarten-Leser angeschlossen ist, eingegeben, und dann zu der Chipkarte gesendet. Diese vergleicht die eingegebene PIN mit der gespeicherten PIN und teilt dann das Ergebnis dem Terminal bzw. dem Computer durch Ausgabe eines entsprechenden Signals mit.

Bei den PINs kann zwischen statischen und änderbaren Pins unterschieden werden. Eine statische PIN ist vom Benutzer nicht mehr veränderbar und muss von diesem auswendig gelernt werden. Ist sie bekannt geworden, dann muss der Kartenbenutzer seine Chipkarte zerstören, um Missbrauch durch Unbefugte zu unterbinden, und sich eine neue Chipkarte mit einer anderen statischen PIN besorgen. Ebenso braucht der Benutzer eine neue Chipkarte, wenn er oder sie die statische PIN vergessen hat.

Eine änderbare PIN kann vom Benutzer nach Belieben geändert werden. Zum Ändern der PIN ist es aus Sicherheitsgründen immer notwendig, die aktuell gültige PIN oder eine PUK mit zu übergeben, da sonst jede bestehende PIN durch einen Angreifer mit seiner eigenen ersetzt werden könnte.

Anders verhält es sich mit den so genannten Super-PINs oder PUKs (Personal Unlocking Key). Diese haben in der Regel mehr Stellen als die eigentliche PIN, und werden dazu benutzt, einen auf seinem Minimalwert stehenden Fehleingabezähler (wird auch als "Fehlbedienungszähler" bezeichnet) einer PIN wieder auf seinen initialen Maximalwert zurückzusetzen. Mit der PUK wird auch gleich eine neue PIN an die Chipkarte übergeben, weil ein zurückgesetzter Fehlbedienungszähler wenig nützt, wenn man die PIN vergessen hat. Und dies ist ja meist der Fall, wenn der Fehlbedienungszähler seinen Maximalwert erreicht hat. Für Chipkarten im Umfeld des Signaturgesetzes ist die Verwendung bzw. Anwendung von Super-PINs oder PUKs jedoch aus Sicherheitsgründen darauf beschränkt, dass lediglich der Fehlbedienungszähler zurückgesetzt wird. Eine neue PIN wird nicht übergeben. Hier muss eine neue Chipkarte beantragt werden, wenn die PIN vergessen wurde.

Es gibt Anwendungen auf Chipkarten, die eine Erstnutzerfunktion, insbesondere Transport-PINs verwenden. Die Chipkarte wird mit einer zufälligen PIN personalisiert, welche der Kartenbenutzer in einem PIN-Brief erhält. Bei der ersten Eingabe wird er aber von der Chipkarte dazu aufgefordert, die personalisierte PIN durch seine eigene zu ersetzen. Bei einem ähnlichen Verfahren, "Null-PIN-Verfahren" genannt, wird die Chipkarte mit einer Trivial-PIN, wie etwa "0000" vorbelegt, und es wird ebenfalls von der Chipkarte bei der ersten Benutzung ein Wechsel erzwungen (vgl. hierzu auch DE 35 23 237 A1, DE 195 07 043 A1, DE 195 07 044 C2, DE 198 50 307 C2, EP 0 730 253 B1).

Aus der DE 198 50 307 C2 ist ein Verfahren zum Schutz vor Missbrauch bei Chipkarten bekannt. Die Chipkarte hat eine Erstnutzerfunktion, die bei der erstmaligen Benutzung der Daten und/oder Funktionen der Chipkarte die Vorgabe einer vom Benutzer beliebig wählbaren, persönlichen Geheimzahl (PIN) fordert, wobei durch die Eingabe der persönlichen Geheimzahl Daten und/oder Funktionen der Chipkarte automatisch in einen Benutzt-Status gesetzt werden. Dieses Verfahren wird auch als "Leer-PIN-Verfahren" bezeichnet. Eine spätere Änderung der persönlichen Geheimzahl wird durch einen übergeordneten Entsperrcode ermöglicht.

Nach der zum Anmeldezeitpunkt unveröffentlichten DE 10 2007 008 652 derselben Anmelderin wird eine Erstnutzerfunktion der Chipkarte so ausgebildet, dass die Erstnutzerfunktion nach vorheriger Verwendung durch den Benutzer von ihrem Benutzt-Status rücksetzbar ist. Diese Rücksetzung von dem Benutzt-Status in den Erstbenutzungsstatus erfolgt auf eine sichere Art und Weise, nämlich durch Eingabe eines Codes. Die Rücksetzbarkeit der Erstnutzerfunktion in den Erstbenutzungsstatus nach vorheriger Benutzung ermöglicht die erneute Wahl einer PIN zum Freischalten der Chipkartenfunktion, wenn der Benutzer beispielsweise die zunächst gewählte PIN vergessen hat.

Nach der zum Anmeldezeitpunkt unveröffentlichten DE 10 2007 008 651 derselben Anmelderin wird eine Chipkarte geschaffen, in der zumindest zwei PINs zum Schutz derselben Chipkarten-Funktion gespeichert sind. Dem berechtigten Benutzer der Chipkarte wird von dem Herausgeber der Chipkarte zunächst nur eine der PINs mitgeteilt. Wenn der Benutzer diese PIN vergisst, so kann er eine Anforderung an den Herausgeber der Chipkarte richten, um von dort die zweite auf seiner Chipkarte gespeicherte PIN zu erhalten.

Die Tatsache, dass Benutzer von Chipkarten ihre PIN vergessen, führt zu einem ganz erheblichen finanziellen und logistischen Aufwand zur Ersetzung der entsprechenden Chipkarten. Dies stellt insbesondere für die Einführung der elektronischen Gesundheitskarte ein bisher ungelöstes Problem dar. Feldversuche zur Einführung der elektronischen Gesundheitskarte in Deutschland haben gezeigt, dass gerade ältere Patienten häufig ihre PIN vergessen. Hierzu ist die Einführung einer sogenannten "Komfort-PIN" vorgeschlagen worden, wonach der Patient seinen Arzt ermächtigen kann, die PIN für ihn einzugeben. Ein solcher Ansatz ist aber aus Gesichtspunkten des Datenschutzes sehr bedenklich und stellt ferner einen weiteren logistischen Aufwand dar, da seitens der Ärzte dann die verschiedenen PINs der Patienten verwaltet werden müssten.

Aus dem Stand der Technik ist es ferner bekannt, dass sich ein Benutzer gegenüber der Chipkarte mit Hilfe eines biometrischen Merkmals authentifizieren kann. Hierzu wird ein biometrisches Merkmal, wie zum Beispiel ein Fingerabdruck des Benutzers, erfasst und die daraus resultierenden biometrischen Daten werden mit auf der Chipkarte gespeicherten Referenzdaten verglichen. Bei hinreichender Übereinstimmung gilt der Benutzer als authentifiziert. Wenn ein solches Verfahren auf der Chipkarte selbst abläuft, so spricht man auch von "Match-on-Card"-Verfahren. Ein solches Verfahren ist beispielsweise aus US 7,278,025 B2 bekannt.

Aus der DE 10 2005 059 001 A1 ist weiterhin tragbares elektronisches Gerät mit einer Schnittstelle zum Zugriff auf eine Chipkarte von einem externen Gerät bekannt. Dieses tragbare Gerät umfasst einen Chipkarten-Leser einem nicht-flüchtigen elektronischen Speicher zur Speicherung von Authentisierungsdaten eines Benutzers, Weiterhin ist ein Sensor zur Erfassung eines biometrischen Merkmals des Benutzers vorgesehen. Zusätzliche Mittel zur Überprüfung des biometrischen Merkmals und zum Zugriff auf den elektronischen Speicher für die Übertragung der Authentisierungsdaten an die Chipkarte über den Chipkarten-Leser erlauben es, wenn die Überprüfung des biometrischen Merkmals erfolgreich ist, die Chipkarten für den Zugriff des externen Geräts freizuschalten.

Weiterhin kombiniert die Druckschrift WO 01/086584 A1 PIN-gestützte und auf Biometrie basierende Sicherungssysteme, indem aus den ermittelten biometrischen Rohdaten nur eindeutig reproduzierbare charakteristische Daten abgeleitet werden. Daraus wiederum wird ein Schlüsseldatensatz erzeugt, der entweder den PIN-Code darstellt oder aus dem der PIN-Code generiert werden kann. Der PIN-Code ist somit immer eindeutig anhand der biometrischen Daten reproduzierbar.

Die Druckschrift US 20061039564 A1 beschreibt einen auf SIM/Smartcards basierenden Sicherheitsansatz im Netzwerk eines Betreibers durch Bereitstellung von Zertifikaten für mobile Geräte zur Authentifizierung der Server. Ein Stammzertifikat ist auf der SIM/Smartcard jedes mobilen Geräts gespeichert und wird vom elektronischen Gerät abgerufen, wenn die SIM/Smartcard in den programmierten Kartenleser eingesteckt wird. Das mobile Gerät authentifiziert jede Serversitzung für die BootstrapBereitstellung und Aktualisierungspaketsitzungen, die von den Servern stammen, indem das Stammzertifikat mit den Zertifikaten der Server überprüft wird, die die Bootstrap-Bereitstellung begleiten und Aktualisierungspaketnachrichten.

Der Erfindung liegt demgegenüber die Aufgabe zugrunde, ein verbessertes Lesegerät für eine Chipkarte und ein Computersystem zu schaffen.

Die der Erfindung zugrunde liegende Aufgabe wird mit den Merkmalen der unabhängigen Patentansprüche gelöst. Ausführungsformen der Erfindung sind in den abhängigen Patentansprüchen angegeben.

Ausführungsformen der Erfindung sind besonders vorteilhaft, da es ermöglicht wird, Merkmale der PIN-basierten Verifikation mit einer biometrischen Benutzerverifikation auf sichere Art und Weise zu verknüpfen.

Nach Ausführungsformen der Erfindung wird ein Lesegerät für eine Chipkarte geschaffen. Unter einer "Chipkarte" wird dabei jedes Dokument verstanden, welches einen Chip, d.h. eine integrierte elektronische Schaltung, beinhaltet, wobei das Dokument zum Beispiel Kunststoff- und/oder Papier-basiert sein kann. Bei der Chipkarte kann es sich um ein Wert- oder Sicherheitsdokument, wie zum Beispiel um ein ID-Dokument, d.h. ein Ausweisdokument, wie zum Beispiel einen Personalausweis, Reisepass, Führerschein, Fahrzeugbrief, Fahrzeugschein oder Firmenausweis, oder ein Zahlungsmittel, wie zum Beispiel eine Banknote, eine Kreditkarte oder einen sonstigen Berechtigungsnachweis, wie zum Beispiel eine Eintrittskarte, einen Frachtbrief, ein Visum oder dergleichen, handeln. Unter einer Chipkarte wird erfindungsgemäß auch ein Dokument verstanden, welches buchartig ausgebildet ist, wie dies zum Beispiel bei einem Reisepass der Fall ist. Unter einer Chipkarte wird erfindungsgemäß auch ein sogenanntes Funketikett verstanden, welches auch als RFID-Tag oder RFID-Label bezeichnet wird. Unter einem Chip wird erfindungsgemäß auch eine integrierte elektronische Schaltung verstanden, die ganz oder teilweise drucktechnisch aufgebracht ist, wie z.B. mittels leitfähiger Tinte. Die Übertragung der Signale und Daten und ggf. auch der Stromversorgung der Chipkarte können auf kontaktbehaftete als auch kontaktlose (berührungslose) Art mittels elektromagnetischer Wellen erfolgen, z.B. so wie dies derzeit für Chipkarten Stand der Technik ist.

Das erfindungsgemäße Lesegerät hat Erfassungsmittel zur Erfassung biometrischer Daten von einem Benutzer. Die Erfassungsmittel können ein oder mehrere biometrische Sensoren zur Erfassung der biometrischen Daten aufweisen. Beispielsweise können die Erfassungsmittel einen einzelnen biometrischen Sensor zur Erfassung eines bestimmten biometrischen Merkmals, wie zum Beispiel eines Fingerabdrucks, eines Iris-Scans oder eines Merkmals der Stimme des Benutzers aufweisen. Alternativ können die Erfassungsmittel zwei oder mehrere verschiedene Sensoren zur Erfassung jeweils unterschiedlicher biometrischer Merkmale aufweisen.

Mit Hilfe von Ableitungsmitteln des Lesegeräts wird aus den sensorisch erfassten biometrischen Daten eine Kennung abgeleitet. Beispielsweise sind die Ableitungsmittel zur Ausführung einer sogenannten Einwegfunktion ("One-Way-Funktion") ausgebildet, welche auf die biometrischen Daten angewendet wird. Insbesondere kann es sich bei der Einwegfunktion um eine sogenannte HASH-Funktion handeln, welche auf die biometrischen Daten angewendet wird, um die Kennung daraus abzuleiten. Hierzu geeignete HASH-Funktionen sind an sich aus dem Stand der Technik bekannt und werden auch als biometric HASH oder BioHASH Funktionen bezeichnet, vergleiche hierzu beispielsweise "Cancellable biometrics and annotations on BioHash", Pattern Recognition, Volume 41, Issue 6, June 2008, Pages 2034-2044*;* Andrew B.J. Teoh, Yip Wai Kuan and Sangyoun Lee ; "A Secure Biometric Authentication Scheme Based on Robust Hashing" Yagiz Sutcu Husrev, Taha Sencar, Nasir Memon, (http://isis.poly.edu/~biomet/yagiz05biometric.pdf).

Nach einer Ausführungsform der Erfindung beinhalten die Ableitungsmittel einen Prozessor, der durch Instruktionen aus einem Programmspeicher gesteuert wird, um aus den Eingangsdaten, d.h. den sensorisch erfassten biometrischen Daten, Ausgangsdaten, d.h. die Kennung, abzuleiten.

Das Lesegerät verfügt ferner über Freischaltungsmittel zur Freischaltung einer Chipkartenfunktion mit Hilfe der Kennung. Die Freischaltungsmittel können dabei so ausgebildet sein, dass die Kennung im Klartext von dem Lesegerät an die Chipkarte übertragen wird, sodass die Chipkarte die Kennung mit in der Chipkarte gespeicherten Referenzdaten vergleichen kann. Wenn die von dem Lesegerät empfangene Kennung mit den in der Chipkarte gespeicherten Referenzdaten übereinstimmt, so schaltet die Chipkarte die betreffende Chipkartenfunktion frei.

Die Freischaltungsmittel können auch so ausgebildet sein, dass die Freischaltung der Chipkartenfunktion mittels einer Fernüberprüfung erfolgt. Unter einer "Fernüberprüfung" wird hier jedes Verfahren verstanden, bei dem die zu überprüfende Kennung nicht in die Chipkarte eingegeben werden muss, um sie mit der dort gespeicherten Kennung zu vergleichen, sondern bei dem die Überprüfung mittels eines den Kartenleser und die Chipkarte involvierenden Protokolls erfolgt. Entsprechende Protokolle sind an sich aus dem Stand der Technik bekannt, wie zum Beispiel Strong Password Only Authentication Key Exchange (SPEKE), Diffie-Hellman Encrypted Key Exchange (DH-EKE), Bellovin-Merritt Protokoll, Extended Access Control (EAC) oder Password Authenticated Connection Establishment (PACE).

Das SPEKE-Protokoll ist beispielsweise bekannt aus www.jablon.org/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt.

Aus "Advanced Security Mechanisms for Machine Readable Travel Documents - Extended Access Control (EAC), Password Authenticated Connection Establishment (PACE), and Restricted Identification (RI)" Version 2.0, Bundesamt für Sicherheit in der Informationstechnik, (http://www.bsi.bund.de/english/publications/techguidelines/tr03110/TR-03110 v200.pdf) sind ferner EAC und PACE Verfahren bekannt.

Die Anwendung solcher Verfahren für die Fernüberprüfung ist insbesondere für Chipkarten mit einer drahtlosen Schnittstelle zu dem Lesegerät vorteilhaft, da hierbei die Kennung nicht von dem Lesegerät an die Chipkarte übertragen werden muss, sodass auch kein Ausspähen der Kennung möglich ist.

Beispielhaft beinhalten die Freischaltungsmittel einen Prozessor, der durch Instruktionen aus einem Programmspeicher gesteuert wird, um mit Hilfe der Kennung über eine Schnittstelle des Lesegeräts zu der Chipkarte eine Chipkartenfunktion freizuschalten.

Das Lesegerät hat ferner Kommunikationsmittel zur Ermöglichung einer Kommunikation zwischen einem Computer und der Chipkarte zur Nutzung der Chipkarten-funktion. Beispielsweise handelt es sich bei dem Computer um einen üblichen Personalcomputer. Der Computer hat eine Schnittstelle, wie zum Beispiel eine USB-Schnittstelle, LAN, WLAN oder dergleichen, an die das Lesegerät angeschlossen werden kann.

Nach einer Ausführungsform der Erfindung beinhalten die Kommunikationsmittel eine Schnittstelle zu der Chipkarte und eine weitere Schnittstelle zur Kommunikation mit einem Computer, so dass eine Kommunikation zwischen dem Computer und der Chipkarte ermöglicht wird. Ein entsprechender Kommunikationskanal zwischen dem Computer und der Chipkarte kann durch einen Prozessor des Lesegeräts aufgebaut werden, indem der Prozessor durch Instruktionen aus einem Programmspeicher gesteuert wird.

Beispielhaft handelt es sich bei der Kennung um eine PIN. Die Kennung kann auch Buchstaben und/oder Sonderzeichen beinhalten. Nach einer Ausführungsform der Erfindung hat das Lesegerät Prüfungsmittel zur Prüfung, ob sich die Chipkarte in einem Erstbenutzungsstatus befindet. Die Prüfungsmittel können so ausgebildet sein, dass ein Chipkartenkommando generiert und an die Chipkarte gesendet wird, um von der Chipkarte deren Status abzufragen, d.h. ob sich die Chipkarte in deren Erstbenutzungsstatus oder in deren Benutzt-Status befindet.

Unter einem "Erstbenutzungsstatus" wird hier ein erster Status der Chipkarte verstanden, wonach die Chipkarte nicht von einem hierzu nicht autorisierten Dritten verwendet worden ist. Unter einem "Benutztstatus" wird hier ein zweiter Status der Chipkarte verstanden, wonach die Chipkarte in Benutzung genommen worden ist, beispielsweise indem eine PIN von dem Benutzer gewählt und in die Chipkarte eingegeben worden ist. Unter einer "Erstbenutzungsfunktion" wird hier eine Funktion der Chipkarte verstanden, die die Bedingungen für den Übergang der Chipkarte von dem Erstbenutzungsstatus in den Benutztstatus festlegt.

In einer exemplarischen Situation hat die Chipkarte ein Speicherregister zur Speicherung eines Wertes, der angibt, ob sich die Chipkarte in dem Erstbenutzungsstatus oder in dem Benutztstatus befindet.

Beispielsweise wird die Erstbenutzungsfunktion durch Programminstruktionen z.B. eines Betriebssystems der Chipkarte realisiert. Durch Ausführung der Programminstruktionen durch einen Prozessor der Chipkarte kann auf das Speicherregister zugegriffen werden, um den Status der Chipkarte von dem Erstbenutzungsstatus in den Benutztstatus zu überführen, wenn die hierfür durch die Erstbenutzungsfunktion vorgegebenen Bedingungen erfüllt sind.

In einer exemplarischen Situation beinhalten die Prüfungsmittel einen Prozessor, der durch Instruktionen aus einem Programmspeicher gesteuert wird, um zu Prüfen, ob sich die Chipkarte in einem Erstbenutzungsstatus befindet.

Wenn sich die Chipkarte in dem Erstbenutzungsstatus befindet, so erfolgt eine Überführung der Chipkarte von dem Erstbenutzungsstatus in den Benutzt-Status durch das Lesegerät. Dies kann so erfolgen, dass zunächst die biometrischen Daten von dem Benutzer durch die Erfassungsmittel erfasst werden, und dass aus diesen biometrischen Daten dann mit Hilfe der Ableitungsmittel die Kennung abgeleitet wird. Die Kennung wird dann durch Überführungsmittel des Lesegeräts von dem Lesegerät an die Chipkarte übertragen, um die Chipkarte von ihrem Erstbenutzungsstatus in den Benutzt-Status zu überführen. Beispielsweise ersetzt diese Kennung eine initial herstellerseitig in der Chipkarte gespeicherte PIN, wie zum Beispiel eine sogenannte 0-PIN, oder es wird auf diese Art und Weise eine initiale Kennung für die Chipkarte definiert, insbesondere bei Anwendung des sogenannten Leer-PIN-Verfahrens, bei dem herstellerseitig keine PIN vergeben wird.

In einer exemplarischen Situation beinhalten die Uberführungsmittel einen Prozessor, der durch Instruktionen aus einem Programmspeicher gesteuert wird, um die Chipkarte von ihrem Erstbenutzungsstatus in den Benutzt-Status zu überführen.

Nach einer Ausführungsform der Erfindung hat das Lesegerät eine Anzeigevorrichtung. Insbesondere wenn sich die Chipkarte zunächst in dem Erstbenutzungsstatus befindet, wird die aus den biometrischen Daten des Benutzers abgeleitete Kennung auf der Anzeigevorrichtung angezeigt, sodass der Benutzer die Kennung ablesen kann, um sich die Kennung zu merken. Beispielsweise hat das Lesegerät ein Bedienelement aufgrund dessen Betätigung die auf der Anzeigevorrichtung angezeigte Kennung dann zu der Chipkarte übertragen wird, um sie mit Hilfe dieser Kennung von dem Erstbenutzungsstatus in den Benutzt-Status zu überführen. Die Anzeige der Kennung anlässlich der Inbenutzungnahme der Chipkarte hat für den Benutzer den Vorteil, dass er damit Kenntnis von dieser Kennung erlangt, sodass er die Chipkarte auch mit einem Standard-Lesegerät verwenden kann, welches die Eingabe der Kennung über eine übliche Tastatur erfordert.

Erfindungsgemäß haben die Ableitungsmittel einen Programmspeicher zur Speicherung von Programminstruktionen, durch welche eine Berechnung der Kennung aus biometrischen Daten durch eine One-Way-Funktion, implementiert wird. Das Lesegerät hat ferner Aktualisierungsmittel zum Empfang von Aktualisierungsdaten, beispielsweise von dem Computer, um mit Hilfe dieser Aktualisierungsdaten die Programminstruktionen zu aktualisieren. Hierdurch wird es ermöglicht, die One-Way-Funktion zu verbessern oder durch eine andere One-Way-Funktion zu ersetzen, um beispielsweise gestiegenen Sicherheitsanforderungen Rechnung zu tragen.

Erfindungsgemäß wird die Authentizität und/oder die Integrität der Aktualisierungsdaten seitens des Lesegeräts geprüft, bevor die Aktualisierung vorgenommen wird. Die Aktualisierungsdaten sind signiert, um eine solche Prüfung zu ermöglichen. Das Lesegerät hat dann Mittel zur Prüfung der Signatur der Aktualisierungsdaten, wobei eine Aktualisierung der in dem Programmspeicher gespeicherten Programminstruktionen mit Hilfe der Aktualisierungsdaten nur dann erfolgt, wenn deren Signatur valide ist. Dies hat den Vorteil, dass nur solche Aktualisierungsdaten von dem Lesegerät akzeptiert werden, welche von einer vertrauenswürdigen Quelle stammen, um so das Lesegerät gegen Manipulationen zu schützen.

In einer exemplarischen Situation beinhalten die Mittel zur Prüfung der Signatur einen Prozessor, der durch Instruktionen aus einem Programmspeicher gesteuert wird, um die Validität einer Signatur zu prüfen.

Nach einer Ausführungsform der Erfindung hat das Lesegerät einen Speicherbereich zur Speicherung eines sogenannten Root-Zertifikats einer Public Key Infrastructure (PKI). Das Root-Zertifikat wird von dem Lesegerät zur Prüfung der Signatur der Aktualisierungsdaten verwendet. Nach einer Ausführungsform der Erfindung sind die Mittel zur Prüfung der Signatur so ausgebildet, dass der Prozessor durch Ausführung der Instruktionen auf den Speicherbereich zugreifen kann, um das Root-Zertifikat zu lesen und um damit die Validität der Signatur zu prüfen.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie z.B. einer Person, einer Organisation oder einem Computersystem, zuzuordnen. Beispielsweise kann das Zertifikat dem Standard X.509 oder einem anderen Standard entsprechen. Bei einem "Root-Zertifikat" handelt es sich um ein Zertifikat, welches einer Wurzelzertifizierungsinstanz (Root-CA) des asymmetrischen Kryptosystems zugeordnet ist.

Erfindungsgemäß werden die signierten Aktualisierungsdaten mit einem Zertifikat durch Aktualisierungsmittel des Lesegeräts empfangen, wobei das Zertifikat eine Rechtedefinition beinhaltet. Vor der Aktualisierung der in dem Programmspeicher gespeicherten Programminstruktionen durch die Aktualisierungsmittel mit Hilfe der Aktualisierungsdaten wird durch das Lesegerät geprüft, ob das Zertifikat eine für diesen Vorgang ausreichende Rechtedefinition beinhaltet. Die Aktualisierung der Programminstruktionen erfolgt nur dann, wenn das Zertifikat die hierzu erforderlichen Rechte definiert. Hierdurch ist ein weiterer Schutz gegen unerlaubte Manipulationen des Lesegeräts gegeben. Unter einer "Rechtedefinition" wird hier ein Teil der strukturierten Daten des Zertifikats verstanden, durch welchen festgelegt wird, ob diejenige Instanz, welche die Aktualisierungsdaten signiert hat, für die Vornahme einer Aktualisierung der Programminstruktionen berechtigt ist.

Nach einer weiteren Ausführungsform der Erfindung hat das Lesegerät mehrere Sensoren zur Erfassung unterschiedlicher biometrischer Merkmale von einem Benutzer. Beispielsweise hat das Lesegerät einen ersten Sensor zur Erfassung eines Fingerabdrucks und einen zweiten Sensor zur Erfassung eines Irisscans von einem Benutzer. Ferner hat das Lesegerät Abfragemittel zur Feststellung eines Typs der Chipkarte, wobei verschiedenen Chipkartentypen verschiedene biometrische Merkmale bzw. Sensoren zugeordnet sein können. Beispielsweise ist für einen ersten Chipkartentyp definiert, dass eine Erfassung des biometrischen Merkmals, d.h. hier des Fingerabdrucks, mit Hilfe des ersten Sensors des Lesegeräts erfolgt, wohingegen für einen zweiten Chipkartentyp definiert ist, dass die Erfassung des biometrischen Merkmals, d.h. hier des Irisscans, mit Hilfe des zweiten Sensors des Lesegeräts erfolgt. Dies hat den besonderen Vorteil, dass das Lesegerät für unterschiedliche Typen von Chipkarten eingesetzt werden kann.

In einer exemplarischen Situation beinhalten die Abfragemittel einen Prozessor, der durch Instruktionen aus einem Programmspeicher gesteuert wird, um einen Typ der Chipkarte festzustellen.

Die Erfassungsmittel können so ausgebildet sein, dass sie neben dem ersten und zweiten Sensor eine Zuordnungsfunktion beinhalten, die den verschiedenen Chipkartentypen jeweils den ersten oder den zweiten Sensor zuordnen. Die Zuordnungsfunktion kann durch eine Zuordnungstabelle realisiert sein, die in einem Speicher des Lesegeräts gespeichert ist und auf die ein Prozessor des Lesegeräts zugreifen kann, der durch Instruktionen aus einem Programmspeicher gesteuert wird, und der mit Hilfe der Zuordnungsfunktion für einen gegebenen Chipkartentyp den diesem Chipkartentyp zugeordneten Sensor ermittelt und diesen ermittelten Sensor dann für die Erfassung des biometrischen Merkmals ansteuert.

Nach einer Ausführungsform der Erfindung ist den verschiedenen Sensoren des Lesegeräts für die Erfassung der verschiedenen biometrischen Merkmale jeweils eine One-Way-Funktion zugeordnet. Beispielsweise ist also eine erste One-Way-Funktion dem ersten Sensor zugeordnet, um aus den durch den ersten Sensor erfassten biometrischen Fingerabdruckdaten eine Kennung für eine Chipkarte des ersten Typs zu generieren, wohingegen eine zweite One-Way-Funktion dem zweiten Sensor zugeordnet ist, um aus den von dem zweiten Sensor erfassten biometrischen Irisscandaten eine Kennung für eine Chipkarte des zweiten Typs zu generieren.

Nach einer Ausführungsform der Erfindung hat das Lesegerät eine Tastatur zur Eingabe einer weiteren Kennung. Die Kennung für die Chipkarte wird dann aus der weiteren Kennung und den biometrischen Daten abgeleitet, beispielsweise indem die biometrischen Daten und die über die Tastatur eingegebene weitere Kennung durch eine logische Operation, wie z.B. XOR, miteinander verknüpft werden, und auf das Ergebnis dieser Verknüpfung die vordefinierte One-Way-Funktion angewendet wird. Alternativ kann auch die One-Way-Funktion nur auf die biometrischen Daten angewendet werden, wobei das Ergebnis der Anwendung der One-Way-Funktion auf die biometrischen Daten mit der weiteren Kennung verknüpft wird, um so die Kennung für die Chipkarte zu erhalten.

Nach einer weiteren Ausführungsform der Erfindung hat das Lesegerät eine Tastatur zur Eingabe einer PUK. Dies hat den Vorteil, dass die Chipkarte durch Eingabe der PUK entsperrt werden kann, wenn nach einer vordefinierten maximalen Anzahl von fehlgeschlagenen Eingabeversuchen die Kennung temporär gesperrt ist.

Ausführungsformen der Erfindung sind besonders vorteilhaft, da die Erfindung den Einsatz von biometrischen Verfahren für die Authentisierung eines Benutzers zum Freischalten einer Chipkartenfunktion ermöglicht, und zwar mit Bezug auf im Stand der Technik übliche Chipkarten ohne biometrische Authentifizierungsmittel, die die Eingabe einer Kennung, insbesondere einer PIN, erfordern. Dabei ist von besonderem Vorteil, dass in dem Lesegerät keinerlei benutzerspezifische Daten gespeichert werden müssen, insbesondere auch keine biometrischen Referenzdaten des Benutzers. Eine kurzfristige Speicherung der biometrischen Daten ist nur für den Zweck der Ableitung der Kennung erforderlich; nachdem die Kennung abgeleitet worden ist, werden die erfassten biometrischen Daten in dem Arbeitsspeicher des Lesegeräts gelöscht.

In einer exemplarischen Situation beinhaltet das Lesegerät einen einzigen Prozessor, der zur Ausführung verschiedener Instruktionen dient, um verschiedene Funktionalitäten, beispielsweise also die Ableitungsmittel, die Freischaltungsmittel, die Kommunikationsmittel, die Prüfungsmittel, die Überführungsmittel, die Mittel zur Prüfung der Signatur und/oder die Abfragemittel zu realisieren. Das Lesegerät kann aber auch mehrere Prozessoren beinhalten, um solche Funktionalitäten zu realisieren. Das Lesegerät kann auch in einem Netzwerk betrieben werden, wobei ein Teil der Funktionalitäten über das Netzwerk zur Verfügung gestellt wird.

In einem weiteren Aspekt betrifft die Erfindung ein Computersystem mit einem Computer, beispielsweise einem üblichen Personalcomputer, ein daran angeschlossenes erfindungsgemäßes Lesegerät sowie eine Chipkarte, die durch Eingabe einer Kennung freischaltbar ist. Bei der Chipkarte kann es sich um eine übliche Chipkarte handeln, die einen Fehlbedienungszähler aufweist, sodass die Chipkarte gesperrt wird, nachdem eine maximale Anzahl von fehlerhaften Eingabeversuchen der Kennung in die Chipkarte erreicht worden ist.

In einem weiteren Aspekt betrifft die Erfindung ein Verfahren zur Freischaltung einer Chipkartenfunktion einer Chipkarte mit folgenden Schritten: Erfassung von biometrischen Daten von einem Benutzer mit Hilfe eines Chipkarten-Lesegeräts, Ableitung einer Kennung aus den biometrischen Daten durch das Chipkarten-Lesegerät, Übertragung der Kennung von dem Chipkarten-Lesegerät zu der Chipkarte zur Freischaltung der Chipkartenfunktion, um eine Nutzung der Chipkartenfunktion durch einen an das Lesegerät angeschlossenen Computer zu ermöglichen.

Das Verfahren schließt das Empfangen von Aktualisierungsdaten für eine Aktualisierung der Programminstruktionen zum Verbessern oder Ersetzen der Einwegfunktion ein, wobei die Aktualisierungsdaten signiert sind, sowie ein Prüfen der Signatur der Aktualisierungsdaten, wobei die Aktualisierung der Programminstruktionen mit Hilfe der Aktualisierungsdaten nur dann erfolgt, falls die Signatur valide ist, sowie ein Prüfen eines zu der Signatur der Aktualisierungsdaten gehörenden Zertifikats, wobei das Zertifikat eine Rechtedefinition beinhaltet, welche festgelegt, ob diejenige Instanz, welche die Aktualisierungsdaten signiert hat, für die Vornahme einer Aktualisierung der Programminstruktionen berechtigt ist, und wobei die Aktualisierung der Programminstruktionen mit Hilfe der Aktualisierungsdaten nur dann erfolgt, wenn die Rechtedefinition in dem Zertifikat die Durchführung der Aktualisierung erlaubt, sowie ein Aktualisieren der Programminstruktionen mit Hilfe der Aktualisierungsdaten, falls die Signatur valide ist und die Rechtedefinition in dem Zertifikat die Durchführung der Aktualisierung erlaubt.

In einem weiteren Aspekt betrifft die Erfindung ein Computerprogrammprodukt, insbesondere ein digitales Speichermedium, mit ausführbaren Instruktionen zur Ausführung eines erfindungsgemäßen Verfahrens.

Im Folgenden werden Ausführungsformen der Erfindung mit Bezugnahme auf die Zeichnungen näher erläutert. Es zeigen:
- Figur 1: ein Blockdiagramm eines beispielhaften Lesegeräts und eines Beispielhaften Computersystems,
- Figur 2: ein Flussdiagramm eines beispielhaften Verfahrens,
- Figur 3: ein Blockdiagramm einer Ausführungsform eines erfindungsgemäßen Lesegeräts und eines erfindungsgemäßen Computersystems,
- Figur 4: ein Blockdiagramm einer weiteren Ausführungsform eines erfindungsgemäßen Lesegeräts und eines erfindungsgemäßen Computersystems.

Elemente der nachfolgenden Ausführungsformen, die einander entsprechen, sind jeweils mit denselben Bezugszeichen gekennzeichnet.

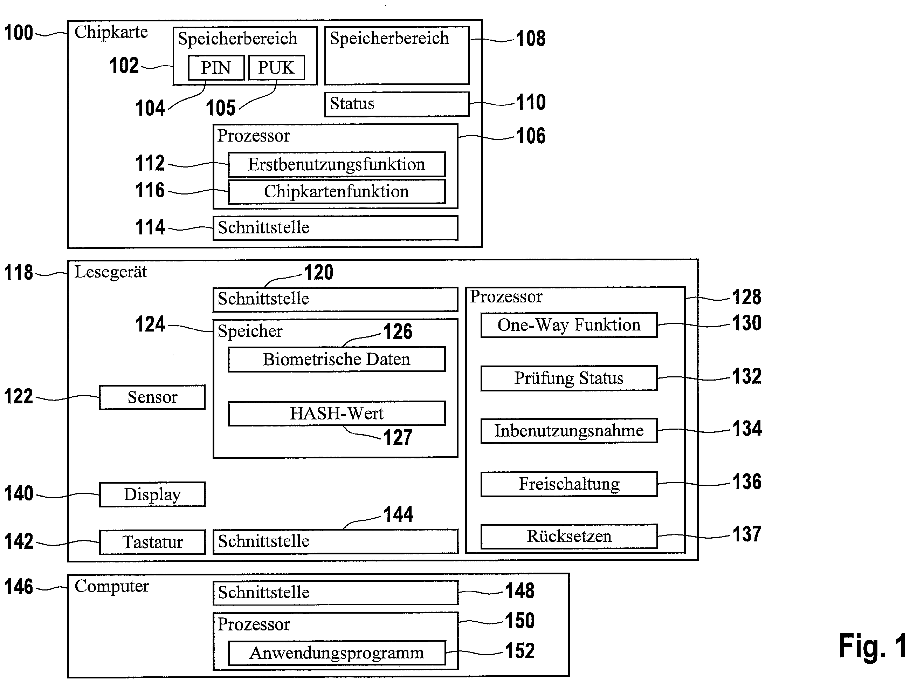

Die Figur 1 zeigt eine Chipkarte 100. Die Chipkarte 100 hat einen geschützten Speicherbereich 102 zur Speicherung einer Kennung 104, wobei es sich bei der Kennung 104 um eine sogenannte PIN handeln kann. Auf den geschützten Speicherbereich 102 kann nur ein Prozessor 106 der Chipkarte 100 zugreifen; ein externer Zugriff auf den geschützten Speicherbereich 102 ist hingegen konstruktiv ausgeschlossen. Biometrische Daten des Benutzers müssen in dem Speicherbereich 102 nicht gespeichert sein.

Die Chipkarte 100 hat ferner einen Speicherbereich 108 zur Speicherung weiterer Daten, wie zum Beispiel zur Speicherung von Benutzerdaten, d.h. sogenannter User Data, die von extern (evtl. nach Freischaltung) über die Schnittstelle 114 ausgelesen werden können, sowie ein Register 110, in dem ein Status der Chipkarte 100 gespeichert ist. Der Inhalt des Registers 110 kann beispielsweise "0" sein, was bedeutet, dass sich die Chipkarte 100 in ihrem Erstbenutzungsstatus befindet oder der Wert des Registers 110 kann "1" sein, was bedeutet, dass sich die Chipkarte 100 in deren Benutzt-Status befindet.

Bei Auslieferung der Chipkarte 100 ist der Inhalt des Registers 110 also "0". Bei einer Inbetriebnahme der Chipkarte 100 kann durch Überprüfung des Inhalts des Registers 110 festgestellt werden, ob sich diese noch in deren Erstbenutzungsstatus befindet, um damit auszuschließen, dass nicht zwischenzeitlich eine unbefugte Benutzung der Chipkarte 100 erfolgt ist.

Der Prozessor 106 der Chipkarte 100 dient zur Ausführung von Programminstruktionen 112, durch die eine Erstbenutzerfunktion implementiert wird. Durch die Erstbenutzerfunktion wird der in dem Register 110 gespeicherte Status der Chipkarte über eine Schnittstelle 114 kommuniziert und es erfolgt aufgrund der Erstbenutzerfunktion ein Übergang des Status von dem Erstbenutzungsstatus in den Benutzt-Status, wobei die Voraussetzungen dieses Übergangs durch das zur Anwendung kommende Verfahren zur Benutzerverifikation (z.B. PIN) definiert sind. Beispielsweise kann die Erstbenutzerfunktion nach dem 0-PIN, Transport-PIN oder nach dem Leer-PIN-Verfahren ausgebildet sein. Insbesondere kann die Erstbenutzerfunktion Teil eines Chipkartenbetriebssystems der Chipkarte 100 sein.

Der Prozessor 106 dient ferner zur Ausführung von Programminstruktionen 116, durch die eine Chipkartenfunktion implementiert wird. Der Chipkartenfunktion ist die Kennung 104, die in dem geschützten Speicherbereich 102 gespeichert ist, zugeordnet. Zur Nutzung der Chipkartenfunktion ist es erforderlich, dass diese freigeschaltet wird. Dies setzt voraus, dass über die Schnittstelle 114 eine Kennung in die Chipkarte 100 eingegeben wird, welche mit der Kennung 104 identisch ist. Durch mehrfache Eingabe einer nicht zutreffenden Kennung über die Schnittstelle 114 kann die Chipkarte 100 in einen Sperrzustand übergehen; diesen Sperrzustand kann die Chipkarte 100 - je nach Ausführungsform - durch Eingabe einer PUK 105 wieder verlassen, wobei dann die Kennung 104 durch eine neue Kennung ersetzt wird oder die Kennung 104 wieder für die Nutzung freigeschaltet wird (z.B. mittels der PUK 105). Die PUK 105 kann in dem geschützten Speicherbereich 102 gespeichert sein.

Das Lesegerät 118 für die Chipkarte 100 hat eine Schnittstelle 120 zur Kommunikation mit der Chipkarte 100 über deren Schnittstelle 114. Das Lesegerät 118 hat ferner zumindest einen Sensor 122 zur Erfassung von biometrischen Daten von einem Benutzer der Chipkarte 100. Beispielsweise kann der Sensor 122 als Fingerabdrucksensor ausgebildet sein. Das Lesegerät 118 hat ferner einen elektronischen Speicher 124 zur temporären Speicherung der mit Hilfe des Sensors 122 erfassten biometrischen Daten 126. Bei dem Speicher 124 kann es sich um einen flüchtigen Speicher handeln, wie zum Beispiel einen Arbeitsspeicher des Lesegeräts 118.

Das Lesegerät hat ferner einen Prozessor 128 zur Ausführung von Programminstruktionen 130, 132, 134, 136 und 137.

Die Programminstruktionen 130 implementieren eine One-Way-Funktion, insbesondere eine biometrische HASH-Funktion zur Generierung eines HASH-Wertes aus den biometrischen Daten 126. Durch Ausführung der Programminstruktionen 136 wird der durch Ausführung der Programminstruktionen 130 generierte HASH-Wert als Kennung von der Schnittstelle 120 zu der Schnittstelle 114 der Chipkarte 100 übertragen, um die Chipkartenfunktion 116 freizuschalten.

Durch Ausführung der Programminstruktionen 132 kann durch das Lesegerät 118 geprüft werden, in welchem Status sich die Chipkarte 100 befindet. Beispielsweise wird durch Ausführung der Programminstruktionen 132 ein Kommando generiert und an die Chipkarte 100 gesendet, um von der Chipkarte den Inhalt des Registers 110 abzufragen.

Durch Ausführung der Programminstruktionen 134 können die für eine Inbenutzungnahme der Chipkarte 100 erforderlichen Schritte durchgeführt werden. Hierzu werden die biometrischen Daten 126 erstmalig von dem Benutzer über den Sensor 122 erfasst. Auf die biometrischen Daten 126 wird die One-Way-Funktion durch Ausführung der Programminstruktionen 130 angewendet, um den HASH-Wert 127 zu erhalten, der in dem Speicher 124 gespeichert wird. Dieser HASH-Wert 127 ist als die Kennung 104 definiert und wird von dem Lesegerät 118 an die Chipkarte 100 übertragen, sodass die Erstbenutzerfunktion der Chipkarte 100 die Kennung 104 in dem geschützten Speicherbereich 102 speichert. Der HASH-Wert 127 wird nur temporär in dem Speicher 124 gespeichert und nach seiner Übertragung als Kennung 104 an die Chipkarte aus dem Speicher 124 gelöscht.

Die Programminstruktionen 137 implementieren eine Funktion zum Zurücksetzen des Fehlbedienungszählers der Chipkarte 100 z.B. mittels der PUK 105.

Das Lesegerät 118 kann ferner ein Display 140 aufweisen. Über das Display 140 kann eine Benutzerführung erfolgen, um dem Benutzer beispielsweise mitzuteilen, was er für die Erfassung der biometrischen Daten 126 zu tun hat. Ferner kann insbesondere bei der Inbenutzungnahme der Chipkarte 100 über das Display 140 der HASH-Wert 127, d.h. die durch Ausführung der One-Way-Funktion definierte Kennung 104, auf dem Display 140 angezeigt werden, sodass der Benutzer Kenntnis von dieser Kennung 104 erhält. Der Benutzer kann sich dann diese Kennung 104 merken und für die Verwendung an beliebigen Kartelesengeräten als Kennung (PIN) verwenden

Das Lesegerät 118 hat ferner optional eine Tastatur 142. Das Lesegerät 118 kann so ausgebildet sein, dass zur Freischaltung der Chipkarte 100 der Benutzer wahlweise seine biometrischen Daten 126 von dem Sensor 122 erfassen lässt oder die Kennung 104 in die Tastatur 142 eingibt. Diese Wahlmöglichkeit hat den Vorteil, dass auch dann eine Freischaltung der Chipkarte 100 mit Hilfe des Lesegeräts 118 möglich ist, wenn der Benutzer daran gehindert ist, die biometrischen Daten mittels des Sensors 122 erfassen zu lassen. Dies kann beispielsweise dann der Fall sein, wenn eine korrekte Erfassung des biometrischen Merkmals nicht möglich ist, z.B. der Benutzer eine Verletzung an seinem Finger hat.

Das Lesegerät 118 kann auch so ausgebildet sein, dass für die Freischaltung der Chipkarte 100 sowohl die Erfassung der biometrischen Daten 126 als auch die Eingabe einer weiteren Kennung über die Tastatur 142 erforderlich ist. Aus der Kombination der weiteren Kennung und der biometrischen Daten 126 generiert der Prozessor 128 unter Verwendung der One-Way-Funktion dann die Kennung 104.

Das Lesegerät 118 hat eine weitere Schnittstelle 144 zum Anschluss des Lesegeräts 118 an einen Computer 146 oder ein Netzwerk. Der Computer hat eine Schnittstelle 148, die zum Anschluss der Schnittstelle 144 des Lesegeräts 118 dient. Bei der Schnittstelle 148 handelt es sich zum Beispiel um eine standardisierte Computer-Schnittstelle, wie zum Beispiel eine USB-Schnittstelle, LAN, WLAN oder dergleichen.

Der Computer 146 hat zumindest einen Prozessor 150 zur Ausführung eines Anwendungsprogramms 152. Ferner kann der Prozessor 150 auch dazu dienen, ein Chipkarten-Treiberprogramm auszuführen, welches zur Generierung von Chipkarten-Kommandos dient, die der Computer 146 über das Lesegerät 118 an die Chipkarte 100 senden kann. Alternativ wird ein solches Chipkarten-Treiberprogramm von dem Lesegerät 118 ausgeführt.

Im Lieferzustand befindet sich die Chipkarte 100 in ihrem Erstbenutzungsstatus, d.h. Status = 0. Ohne Beschränkung der Allgemeinheit wird im Weiteren davon ausgegangen, dass die Erstbenutzerfunktion 112 ein Leer-PIN-Verfahren implementiert, d.h. es ist initial in dem Erstbenutzungsstatus keine Kennung in dem Speicherbereich 102 gespeichert.

Bei Kopplung der Chipkarte 100 mit dem Lesegerät 118 erwartet die Chipkarte 100 bzw. deren Erstbenutzerfunktion also die initiale Eingabe der Kennung 104. Bei Kopplung der Chipkarte 100 mit dem Lesegerät 118 werden seitens des Lesegeräts 118 zunächst die Programminstruktionen 132 ausgeführt, um den Status der Chipkarte 100 zu prüfen.

Da sich die Chipkarte zunächst in ihrem Erstbenutzungsstatus befindet, wird danach die Ausführung der Programminstruktionen 134 gestartet, um die Chipkarte 100 in Benutzung zu nehmen. Hierzu wird über das Display 140 eine Aufforderung an den Benutzer ausgegeben, damit dessen biometrische Daten von dem Sensor 122 erfasst werden können. Beispielsweise wird der Benutzer dazu aufgefordert, einen Finger auf den Sensor 122 zu legen, damit Fingerabdruckdaten als biometrische Daten 126 erfasst werden können. Durch Ausführung der Programminstruktionen 130 wird aus den biometrischen Daten 126 dann durch Ausführung der Programminstruktionen 130 der Hashwert 127 als die Kennung 104 gewonnen, welche von dem Lesegerät 118 an die Chipkarte 100 übertragen wird, und dort durch Ausführung der Programminstruktionen 112 in den Speicherbereich 102 gespeichert wird. Der in dem Register 110 gespeicherte Status wird dann auf den Benutzt-Status = 1 gesetzt.

Vorzugsweise wird die Kennung 104 auf dem Display 140 angezeigt, sodass der Benutzer Kenntnis von der Kennung 104 erhält. Beispielsweise erscheint die Kennung 104 während eines vorgegebenen Zeitraums von zum Beispiel einigen Sekunden oder einer Minute auf dem Display 140 oder so lange, bis ein Benutzer die Anzeige durch Betätigung eines Bedienelements des Lesegeräts 118 löscht.

Die Kennung 104 wird während der Anzeige auf dem Display 140 zum Beispiel in dem Speicher 124 des Lesegeräts 118 temporär gespeichert. Nach der Beendigung der Anzeige der Kennung 104 auf dem Display 140 wird die Kennung 104 aus dem Speicher 124 gelöscht. Ferner werden auch die biometrischen Daten 126 aus dem Speicher 124 gelöscht, nachdem die Kennung 104 durch Ausführung der Programminstruktionen 130 erzeugt worden ist. Dies hat den Vorteil, dass in dem Lesegerät 118 keinerlei personenbezogenen Daten des Benutzers und auch keinerlei Daten betreffend dessen Chipkarte 100 gespeichert werden. Auch der Hashwert 127, d.h. die Kennung 104 wird in dem Lesegerät 118 gelöscht, nachdem diese zu der Chipkarte 100 übertragen worden ist. Für jeden Eingabeversuch der Kennung 104 werden also die biometrischen Daten 126 erneut erfaßt.

Die Steuerung der Abläufe zur Freischaltung der Karte bei der Erstbenutzung bzw. der Entsperrung der Kennung 104 durch die PUK 105 kann alternativ auch durch den Computer 146 erfolgen, so dass das Lesergerät 118 die vom Computer 146 vorgegeben Schritte entsprechend durchführt.

Nachdem die Chipkarte 100 in deren Benutzt-Status überführt worden ist, kann zur Nutzung von deren Chipkartenfunktion wie folgt vorgegangen werden:
Nachdem die Chipkarte 100 mit dem Lesegerät 118 über die Schnittstellen 114 und 120 gekoppelt worden ist, wird durch Ausführung der Programminstruktionen 132 wiederum zunächst der Status der Chipkarte 100 festgestellt. Da dieser Status jetzt der Benutzt-Status ist, wird die Ausführung der Programminstruktionen 136 gestartet. Der Benutzer wird über das Display 140 zur Erfassung der biometrischen Daten zum Beispiel durch Auflegen eines Fingers auf den Sensor 122 zur Erfassung der Fingerabdruckdaten als biometrische Daten 126 aufgefordert. Nach Erfassung der biometrischen Daten 126 wird die Ausführung der Programminstruktionen 130 gestartet, um daraus die Kennung 104 zu gewinnen. Die Kennung 104 wird dann von dem Lesegerät 118 an die Chipkarte 100 übertragen, sodass die Chipkarte 100 die von dem Lesegerät 118 empfangene Kennung mit der in dem Speicherbereich 102 gespeicherten Kennung 104 vergleichen kann. Bei Übereinstimmung der beiden Kennungen wird die Chipkartenfunktion freigeschaltet. Die biometrischen Daten 126 werden aus dem Speicher 124 gelöscht, nachdem die Kennung 104 durch Ausführung der Programminstruktionen 130 erzeugt worden ist.

Das Lesegerät 118 kann so ausgebildet sein, dass der Benutzer als Alternative zur Eingabe der Kennung durch Erfassung der biometrischen Daten die Kennung 127 auch über die Tastatur 142 eingeben kann.

Nach Freischaltung der Chipkartenfunktion kann das Anwendungsprogramm 152 des Computers 146 diese Chipkartenfunktion verwenden, indem es über das Lesegerät 118 auf die Chipkarte 100 zugreift.

Die Schnittstelle 114 der Chipkarte 100 und die Schnittstelle 120 des Lesegeräts 118 können als kontaktbehaftete, kontaktlose oder als sogenannte Dual Mode Interface ausgebildet sein. Das Lesegerät 118 kann auch über mehrere gleiche oder verschiedene Schnittstellen 120 verfügen.

Ferner kann die Schnittstelle 144 des Lesegeräts 118 auch als LAN oder WLAN Schnittstelle ausgebildet sein. Das Lesegerät 118 kann auch mehrere gleiche oder verschiedene Schnittstellen 114 zu externen Host-Computern aufweisen.

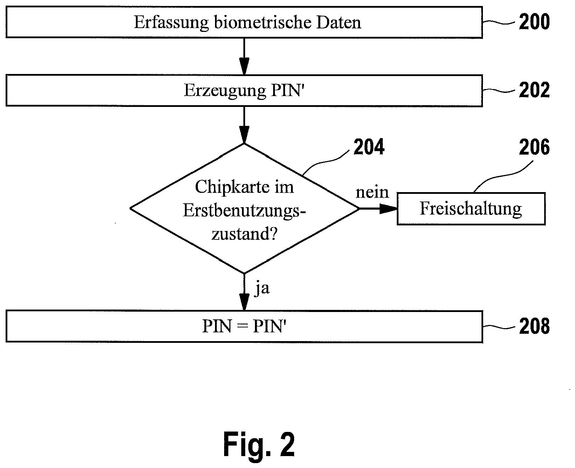

Die Figur 2 zeigt eine Ausführungsform eines erfindungsgemäßen Verfahrens. In dem Schritt 200 werden biometrische Daten von einem Benutzer der Chipkarte durch das Lesegerät erfasst. Aus diesen biometrischen Daten wird in dem Schritt 202 von dem Lesegerät eine Kennung erzeugt, und zwar vorzugsweise durch Ausführung einer sogenannten biometrischen HASH-Funktion. Diese Kennung wird im Weiteren als PIN' bezeichnet.

In dem Schritt 204 wird dann von dem Lesegerät geprüft, ob sich die Chipkarte in ihrem Erstbenutzungszustand befindet. Ist dies nicht der Fall, d.h. befindet sich die Chipkarte in ihrem Benutzt-Zustand, so wird in dem Schritt 206 die PIN' von dem Lesegerät zu der Chipkarte übertragen, sodass eine Chipkartenfunktion der Chipkarte freigeschaltet wird, wenn die PIN' mit der in der Chipkarte gespeicherten Kennung, d.h. der PIN, übereinstimmt.

Befindet sich die Chipkarte hingegen in ihrem Erstbenutzungszustand, so werden von dem Lesegerät die erforderlichen Eingaben in die Chipkarte getätigt, sodass die PIN' als die PIN der Chipkarte definiert wird. Beispielsweise ersetzt das Lesegerät eine initial im Erstbenutzungszustand der Chipkarte gespeicherte PIN durch die PIN'. Dies erfolgt insbesondere dann, wenn die Chipkarte 100 ein 0-PIN-Verfahren implementiert. Wenn die Chipkarte 100 ein Leer-PIN-Verfahren implementiert, so wird die PIN' als die initiale PIN der Chipkarte von dem Lesegerät gesetzt.

Von wesentlichem Vorteil ist, dass nach der Erzeugung der PIN' in dem Schritt 202 die biometrischen Daten in dem Lesegerät gelöscht werden können und dass die PIN' nach der Übertragung zu der Chipkarte in dem Schritt 206 bzw. in dem Schritt 208 ebenfalls in dem Lesegerät gelöscht werden kann, sodass also keine sensitiven Daten permanent in dem Lesegerät gespeichert werden müssen.

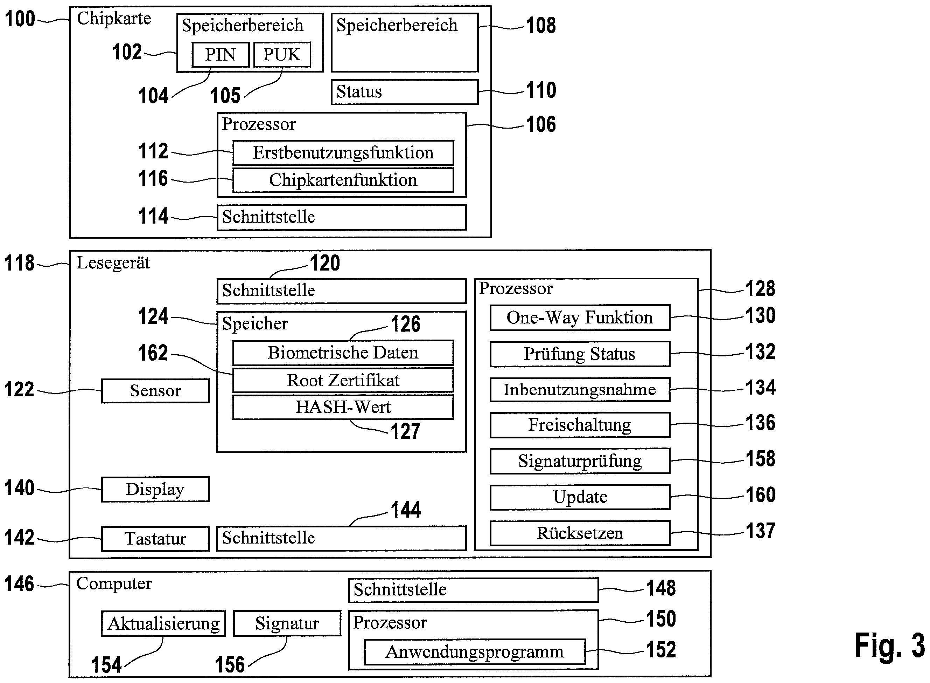

Die Figur 3 zeigt eine Ausführungsform des Lesegeräts 118, bei dem die Programminstruktionen 130 aktualisierbar sind, um beispielsweise eine gegebene One-Way-Funktion durch eine verbesserte Version zu ersetzen oder um die One-Way-Funktion durch eine andere One-Way-Funktion auszutauschen. Zur Aktualisierung der Programminstruktionen 130 können beispielsweise von dem Computer 146 über die Schnittstelle 144 Aktualisierungsdaten 154 empfangen werden. Die Aktualisierungsdaten können Programminstruktionen beinhalten, durch welche die Programminstruktionen 130 ergänzt oder ersetzt werden. Vorzugsweise sind die Aktualisierungsdaten 154 von einer vertrauenswürdigen Quelle signiert, weisen also eine Signatur 156 auf. Zu der Signatur gehört auch ein Zertifikat einer PKI der vertrauenswürdigen Quelle.

Zur Durchführung einer Aktualisierung dient der Prozessor 128 zur Ausführung von Programminstruktionen 158 und zur Ausführung von Programminstruktionen 160. Ferner ist in dem Speicher 124 ein sogenanntes Root-Zertifikat 162 der PKI gespeichert.

Die Programminstruktionen 158 dienen zur Prüfung der Validität der Signatur 156 und die Programminstruktionen 160 dienen zur Aktualisierung der Programminstruktionen 130 mit Hilfe der Aktualisierungsdaten 154.

Zur Aktualisierung der Programminstruktionen 130 wird beispielsweise wie folgt vorgegangen:
Zunächst werden die signierten Aktualisierungsdaten 154 auf den Computer 146 geladen. Dies kann zum Beispiel durch Herunterladen der Aktualisierungsdaten 154 von einem Netzwerk erfolgen. Die signierten Aktualisierungsdaten 154 werden dann von dem Computer 146 über die Schnittstellen 148 und 144 zu dem Lesegerät 118 übertragen. Durch Ausführung der Programminstruktionen 158 wird dann die Validität der Signatur 156 geprüft, wozu das in dem Speicher 124 gespeicherte Root-Zertifikat 162 von den Programminstruktionen 158 verwendet wird. Für den Fall, dass die Signatur 156 valide ist, werden die Programminstruktionen 130 durch Ausführung der Programminstruktionen 160 mit Hilfe der Aktualisierungsdaten 154 aktualisiert.

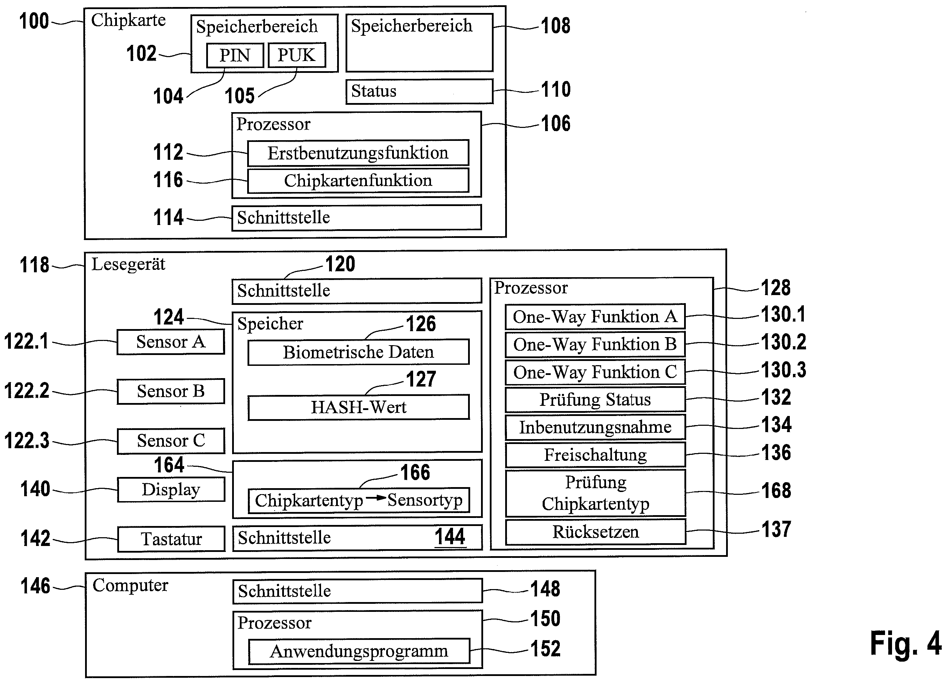

Die Figur 4 zeigt eine Ausführungsform des Lesegeräts 118, welches für Chipkarten verschiedener Chipkartentypen verwendet werden kann, wie zum Beispiel der Chipkartentypen A, B und C. Beispielsweise unterscheiden sich die Chipkartentypen A, B und C durch unterschiedliche Sicherheitsanforderungen voneinander, sodass die Kennung 104 je nach dem Chipkartentyp unterschiedlich lang sein muss oder von unterschiedlich kombinierten biometrischen Merkmalen und Nutzereingaben abgeleitet werden muss.

Beispielsweise hat das Lesegerät 118 für jeden der unterstützten Chipkartentypen einen separaten Sensor. Der Sensor A 122.1 dient zur Erfassung der biometrischen Daten 126, wenn die Chipkarte 100 den Chipkartentyp A hat, der Sensor B 122.2 dient zur Erfassung der biometrischen Daten 126, wenn die Chipkarte 100 den Chipkartentyp B hat und der Sensor C 122.3 dient zur Erfassung der biometrischen Daten 126, wenn die Chipkarte 100 den Chipkartentyp C hat. Beispielsweise handelt es sich bei dem Sensor A um einen Fingerabdrucksensor, bei dem Sensor um einen Sensor zur Erfassung eines Irisscans und bei dem Sensor C um einen Sensor zur Erfassung einer Gesichtsgeometrie des Benutzers der Chipkarte 100.

Das Lesegerät 118 hat einen nicht-volatilen Speicher 164 zur Speicherung einer Zuordnungstabelle 166, die jedem der unterstützten Chipkartentypen zumindest einen der vorhandenen Sensortypen zuordnet. In dem betrachteten Beispielsfall beinhaltet die Zuordnungstabelle 166 in dem Speicher 164 also die Zuordnungen
Chipkartentyp A → Sensortyp A,
Chipkartentyp B → Sensortyp B,
Chipkartentyp C → Sensortyp C.

Alternativ oder zusätzlich zu der Zuordnung der Chipkartentypen zu den Sensortypen kann die Zuordnungstabelle 166 des Speichers 164 auch eine Zuordnung verschiedener One-Way-Funktionen zu den Chipkartentypen und/oder den Sensortypen aufweisen. Beispielsweise dient der Prozessor 128 hier zur Ausführung der Programminstruktionen 130.1, 130.2 und 130.3 durch die die One-Way-Funktionen A, B bzw. C implementiert werden. Der Chipkartentyp A wird dann durch die Zuordnungstabelle der One-Way-Funktion A zugeordnet und entsprechend werden der Chipkartentyp B der One-Way-Funktion B und der Chipkartentyp C der One-Way-Funktion C zugeordnet.

Der Prozessor 128 dient ferner zur Ausführung von Programminstruktionen 168 zur Prüfung des Chipkartentyps der Chipkarte 100.

Wenn die Chipkarte 100 in den Empfangs- oder Kontaktbereich der Schnittstelle 120 des Lesegeräts 118 gebracht wird, so wird durch Ausführung der Programminstruktionen 168 seitens des Lesegeräts 118 zunächst der Chipkartentyp von der Chipkarte 100 abgefragt. Es wird dann mit dem abgefragten Chipkartentyp auf die Zuordnungstabelle 166 zugegriffen, um festzustellen, welcher der Sensoren A, B oder C und welche der One-Way-Funktionen A, B oder C für den Chipkartentyp der Chipkarte 100 verwendet werden sollen. Wenn beispielsweise die Chipkarte den Typ A hat, so sind dies beispielsweise der Sensor A und die One-Way-Funktion A.

Für die nachfolgende Erfassung der biometrischen Daten (vgl. Schritt 200 in der Ausführungsform der Figur 2) wird dann der Sensor A verwendet und für die Erzeugung der Kennung 104 aus den biometrischen Daten 126 wird die One-Way-Funktion A verwendet.

Die Benutzerführung kann so ausgebildet sein, dass auf dem Display 140 angezeigt wird, was der Benutzer zu tun hat, damit die biometrischen Daten 126 in Abhängigkeit von dem durch die Zuordnungstabelle 166 und den Chipkartentyp 100 determinierten Sensortyp erfasst werden können.

### Bezugszeichenliste

- 100: Chipkarte
- 102: Speicherbereich
- 104: Kennung
- 105: PUK
- 106: Prozessor
- 108: Speicherbereich
- 110: Register
- 112: Programminstruktionen
- 114: Schnittstelle
- 116: Programminstruktionen
- 118: Lesegerät
- 120: Schnittstelle
- 122: Sensor
- 124: Speicher
- 126: biometrische Daten
- 127: Hashwert
- 128: Prozessor
- 130: Programminstruktionen
- 132: Programminstruktionen
- 134: Programminstruktionen
- 136: Programminstruktionen
- 140: Display
- 142: Tastatur
- 144: Schnittstelle
- 146: Computer
- 148: Schnittstelle
- 150: Prozessor
- 152: Anwendungsprogramm
- 154: Aktualisierungsdaten
- 156: Signatur
- 158: Programminstruktionen
- 160: Programminstruktionen
- 162: Root-Zertifikat
- 164: Speicher
- 166: Zuordnungstabelle
- 168: Programminstruktionen

## Patentansprüche

1. Lesegerät für eine Chipkarte mit
- Erfassungsmitteln (122) zur Erfassung biometrischer Daten (126) von einem Benutzer,
- Ableitungsmitteln (128, 130) zur Ableitung einer Kennung (104) aus den biometrischen Daten,
- Freischaltungsmitteln (120, 128, 136) zur Freischaltung einer Chipkartenfunktion (116) mit der Kennung,
- Kommunikationsmitteln (120, 144) zur Ermöglichung einer Kommunikation zwischen einem Computer (146) und der Chipkarte zur Nutzung der Chipkartenfunktion durch den Computer,
wobei die Ableitungsmittel zur Ausführung einer Einwegfunktion ausgebildet sind, um aus den biometrischen Daten die Kennung abzuleiten, wobei es sich bei der Einwegfunktion um eine HASH-Funktion handelt, die dazu ausgebildet ist, aus den biometrischen Daten einen HASH-Wert (102) als Kennung (104) abzuleiten, wobei die Ableitungsmittel einen Speicherbereich zur Speicherung von Programminstruktionen aufweisen, durch welche die Ableitung der Kennung implementiert wird, und mit Aktualisierungsmitteln (160) zum Empfang von Aktualisierungsdaten (154) für eine Aktualisierung der Programminstruktionen zum Verbessern oder Ersetzen der Einwegfunktion, wobei die Aktualisierungsdaten signiert sind, und mit Mitteln (158, 162) zur Prüfung der Signatur (156) der Aktualisierungsdaten, wobei die Aktualisierungsmittel so ausgebildet sind, dass die Aktualisierung der Programminstruktionen mit Hilfe der Aktualisierungsdaten nur dann erfolgt, falls die Signatur valide ist, wobei zu der Signatur (156) der Aktualisierungsdaten ein Zertifikat gehört, wobei das Zertifikat eine Rechtedefinition beinhaltet, welche festlegt, ob diejenige Instanz, welche die Aktualisierungsdaten signiert hat, für die Vornahme einer Aktualisierung der Programminstruktionen berechtigt ist, und wobei die Aktualisierungsmittel so ausgebildet sind, dass die Aktualisierung der Programminstruktionen mit Hilfe der Aktualisierungsdaten nur dann erfolgt, wenn die Rechtedefinition in dem Zertifikat die Durchführung der Aktualisierung erlaubt.

2. Lesegerät nach Anspruch 1, mit Prüfungsmitteln (132) zur Prüfung, ob sich die Chipkarte in einem Erstbenutzungsstatus befindet, und Überführungsmitteln (134) zur Überführung der Chipkarte in einen Benutzt-Status mit Hilfe der Kennung, wenn der Erstbenutzungsstatus der Chipkarte vorliegt.

3. Lesegerät nach Anspruch 2, wobei die Überführungsmittel so ausgebildet sind, dass die Kennung als initiale Kennung zu der Chipkarte übertragen wird, nachdem deren Erstbenutzungsstatus festgestellt worden ist, um die Chipkarte von dem Erstbenutzungsstatus in den Benutzt-Status zu überführen.

4. Lesegerät nach Anspruch 2 oder 3, mit einer Anzeigevorrichtung (140) zur temporären Anzeige der Kennung.

5. Lesegerät nach einem der vorhergehenden Ansprüche, mit einem Speicherbereich zur Speicherung eines Root-Zertifikats einer Public Key Infrastructure, wobei die Mittel zur Prüfung der Signatur zum Zugriff auf das Root-Zertifikat ausgebildet sind, um die Signaturprüfung durchzuführen.

6. Lesegerät nach einem der vorhergehenden Ansprüche, wobei die Erfassungsmittel zumindest einen ersten Sensor (122.1) zur Erfassung eines ersten biometrischen Merkmals und einen zweiten Sensor (122.2) zur Erfassung eines zweiten biometrischen Merkmals aufweisen, wobei der erste Sensor einem ersten Chipkartentyp und der zweite Sensor einen zweiten Chipkartentyp zugeordnet ist, und mit Abfragemitteln (168) zur Abfrage des Chipkartentyps von der Chipkarte, wobei die Erfassungsmittel so ausgebildet sind, dass in Abhängigkeit von dem Chipkartentyp der Chipkarte der erste Sensor oder der zweite Sensor für die Erfassung der biometrischen Daten ausgewählt wird.

7. Lesegerät nach Anspruch 6, wobei dem ersten Sensor eine erste Einwegfunktion (130.1) zugeordnet ist und wobei dem zweiten Sensor eine zweite Einwegfunktion (130.2) zugeordnet ist, wobei die Ableitungsmittel so ausgebildet sind, dass für die Ableitung der Kennung die erste Einwegfunktion verwendet wird, wenn die Erfassung der biometrischen Daten durch den ersten Sensor erfolgt ist, und dass zur Ableitung der Kennung die zweite Einwegfunktion verwendet wird, wenn die Erfassung der biometrischen Daten von dem zweiten Sensor erfolgt ist.

8. Lesegerät nach einem der vorhergehenden Ansprüche mit einer Tastatur (142) zur Eingabe einer weiteren Kennung, wobei die Ableitungsmittel zur Ableitung der Kennung aus einer Kombination der biometrischen Daten und der weiteren Kennung ausgebildet sind.

9. Lesegerät nach einem der vorhergehenden Ansprüche, mit einer Tastatur zur Eingabe einer PUK zur Entsperrung der Chipkarte bei temporär gesperrter Kennung.

10. Computersystem mit
- einem Computer (146),
- einem Lesegerät (118) nach einem der vorhergehenden Ansprüche, wobei die Kommunikationsmittel des Lesegeräts an den Computer angeschlossen sind,
- einer Chipkarte (100), wobei eine Chipkartenfunktion der Chipkarte durch Eingabe der Kennung in die Chipkarte freischaltbar ist.

11. Computersystem nach Anspruch 10, wobei die Chipkarte einen Fehlbedienungszähler aufweist, sodass die Chipkarte in einen Sperrzustand übergeht, nachdem eine maximale Anzahl von Fehlbedienungen erreicht worden ist.

12. Verfahren zur Freischaltung einer Chipkartenfunktion (116) einer Chipkarte (100) mit folgenden Schritten:
- Erfassung von biometrischen Daten (126) von einem Benutzer mit Hilfe eines Chipkarten-Lesegeräts (118),
- Ableitung einer Kennung (104) aus den biometrischen Daten durch Ableitungsmittel (128, 130) des Chipkarten-Lesegeräts, wobei die Ableitungsmittel zur Ausführung einer Einwegfunktion ausgebildet sind, um aus den biometrischen Daten die Kennung abzuleiten, wobei es sich bei der Einwegfunktion um eine HASH-Funktion handelt, die dazu ausgebildet ist, aus den biometrischen Daten einen HASH-Wert (102) als Kennung (104) abzuleiten, wobei die Ableitungsmittel einen Speicherbereich zur Speicherung von Programminstruktionen aufweisen, durch welche die Ableitung der Kennung implementiert wird,
- Übertragung der Kennung von dem Chipkarten-Lesegerät zu der Chipkarte zur Freischaltung der Chipkartenfunktion, um eine Nutzung der Chipkartenfunktion durch einen an das Lesegerät angeschlossenen Computer (146) zu ermöglichen,
mit folgenden weiteren Schritten:
- Empfangen von Aktualisierungsdaten (154) für eine Aktualisierung der Programminstruktionen zum Verbessern oder Ersetzen der Einwegfunktion, wobei die Aktualisierungsdaten signiert sind,
- Prüfen der Signatur (156) der Aktualisierungsdaten, wobei die Aktualisierung der Programminstruktionen mit Hilfe der Aktualisierungsdaten nur dann erfolgt, falls die Signatur valide ist,
- Prüfen eines zu der Signatur (156) der Aktualisierungsdaten gehörenden Zertifikats, wobei das Zertifikat eine Rechtedefinition beinhaltet, welche festgelegt, ob diejenige Instanz, welche die Aktualisierungsdaten signiert hat, für die Vornahme einer Aktualisierung der Programminstruktionen berechtigt ist, und wobei die Aktualisierung der Programminstruktionen mit Hilfe der Aktualisierungsdaten nur dann erfolgt, wenn die Rechtedefinition in dem Zertifikat die Durchführung der Aktualisierung erlaubt,
- Aktualisieren der Programminstruktionen mit Hilfe der Aktualisierungsdaten, falls die Signatur valide ist und die Rechtedefinition in dem Zertifikat die Durchführung der Aktualisierung erlaubt.

13. Verfahren nach Anspruch 12, mit folgenden weiteren Schritten:
- Prüfung, ob sich die Chipkarte in einem Erstbenutzungsstatus befindet,
- Überführung der Chipkarte von dem Erstbenutzungsstatus in einen Benutzt-Status durch Übertragung der Kennung von dem Lesegerät an die Chipkarte.

14. Verfahren nach Anspruch 12 oder 13, wobei die Kennung nach deren Ableitung temporär auf einer Anzeigevorrichtung des Lesegeräts angezeigt wird.

15. Verfahren nach einem der vorhergehenden Ansprüche, wobei die biometrischen Daten nach der Ableitung der Kennung aus einem Arbeitsspeicher des Lesegeräts gelöscht werden.

16. Computerprogrammprodukt, insbesondere digitales Speichermedium, mit ausführbaren Instruktionen zur Ausführung eines Verfahrens nach einem der Ansprüche 12 bis 13.

## Claims

1. A reader for a smart card, comprising
- acquisition means (122) for acquiring biometric data (126) from a user,
- derivation means (128, 130) for deriving an identifier (104) from the biometric data,
- release means (120, 128, 136) for releasing a smart card function (116) with the identifier,
- communication means (120, 144) for enabling communication between a computer (146) and the smart card for use of the smart card function by the computer,
wherein the derivation means are designed to carry out a one-way function in order to derive the identifier from the biometric data, wherein the one-way function is a HASH function, which is designed to derive a HASH value (102) as identifier (104) from the biometric data, wherein the derivation means have a memory region for storing program instructions, by which the derivation of the identifier is implemented, and comprising update means (160) for receiving update data (154) for updating the program instructions in order to improve or replace the one-way function, wherein the update data are signed, and comprising means (158, 162) for checking the signature (156) of the update data, wherein the update means are designed such that the program instructions are updated with the aid of the update data only if the signature is valid, wherein a certificate belongs to the signature (156) of the update data, wherein the certificate contains a rights definition, which defines whether the authority that has signed the update data is authorised to carry out an update of the program instructions, and wherein the update means are designed such that the program instructions are updated with the aid of the update data only if the rights definition in the certificate allows the update to be performed.

2. The reader according to claim 1, comprising inspection means (132) for checking whether the smart card is in a first-use state, and transfer means (134) for transferring the smart card into a used state with the aid of the identifier if the first-use state of the smart card is present.

3. The reader according to claim 2, wherein the transfer means are designed such that the identifier is transmitted as initial identifier to the smart card, once the first-use state has been determined, in order to transfer the smart card from the first-use state into the used state.

4. The reader according to claim 2 or 3, comprising a display device (140) for temporarily displaying the identifier.

5. The reader according to one of the preceding claims, comprising a memory region for storing a root certificate of a public key infrastructure, wherein the means for checking the signature are designed to access the root certificate in order to carry out the signature check.

6. The reader according to one of the preceding claims, wherein the acquisition means comprise at least a first sensor (122.1) for acquiring a first biometric feature and a second sensor (122.2) for acquiring a second biometric feature, wherein the first sensor is associated with a first smart card type and the second sensor is associated with a second smart card type, and comprising query means (168) for querying the smart card type, wherein the acquisition means are designed such that the first sensor or the second sensor is selected for the acquisition of the biometric data depending on the smart card type.

7. The reader according to claim 6, wherein a first one-way function (130.1) is associated with the first sensor, and wherein a second one-way function (130.2) is associated with the second sensor, wherein the derivation means are designed such that the first one-way function is used to derive the identifier if the biometric data have been acquired by the first sensor, and such that the second one-way function is used to derive the identifier if the biometric data have been acquired by the second sensor.

8. The reader according to one of the preceding claims, comprising a keypad (142) for inputting a further identifier, wherein the derivation means are designed to derive the identifier from a combination of the biometric data and the further identifier.

9. The reader according to one of the preceding claims, comprising a keypad for inputting a PUK for unblocking the smart card with temporarily blocked identifier.

10. A computer system, comprising
- a computer (146),
- a reader (118) according to one of the preceding claims, wherein the communication means of the reader are connected to the computer,
- a smart card (100), wherein a smart card function of the smart card can be released by inputting the identifier into the smart card.

11. The computer system according to claim 10, wherein the smart card has an operating error counter so that the smart card transfers into a blocked state once a maximum number of operating errors has been reached.

12. A method for releasing a smart card function (116) of a smart card (100), comprising the following steps:
- acquiring biometric data (126) from a user with the aid of a smart card reader (118),
- deriving an identifier (104) from the biometric data by derivation means (128, 130) of the smart card reader, wherein the derivation means are designed to carry out a one-way function in order to derive the identifier from the biometric data, wherein the one-way function is a HASH function, which is designed to derive a HASH value (102) as identifier (104) from the biometric data, wherein the derivation means have a memory region for storing program instructions, by which the derivation of the identifier is implemented,
- transmitting the identifier from the smart card reader to the smart card in order to release the smart card function so as to enable use of the smart card function by a computer (146) connected to the reader,
the method comprising the following further steps:
- receiving update data (154) for updating the program instructions in order to improve or replace the one-way function, the update data being signed,
- checking the signature (156) of the update data, wherein the program instructions are updated with the aid of the update data only if the signature is valid,
- checking a certificate belonging to the signature (156) of the update data, wherein the certificate contains a rights definition, which defines whether the authority that has signed the update data is authorised to carry out an update of the program instructions, and wherein the program instructions are updated with the aid of the update data only if the rights definition in the certificate allows the update to be performed,
- updating the program instructions with the aid of the update data if the signature is valid and the rights definition in the certificate allows the update to be performed.

13. The method according to claim 12, comprising the following further steps:
- checking whether the smart card is in a first-use state,
- transferring the smart card from the first-use state into a used state by transmitting the identifier from the reader to the smart card.

14. The method according to claim 12 or 13, wherein the identifier, after having been derived, is displayed temporarily on a display device of the reader.

15. The method according to one of the preceding claims, wherein the biometric data are deleted from a main memory of the reader once the identifier has been derived.

16. A computer program product, in particular a digital storage medium, comprising executable instructions for carrying out a method according to one of claims 12 to 13.

## Revendications

1. Lecteur destiné à une carte à puce doté
- de moyens de détection (122) pour la détection de données biométriques (126) d'un utilisateur,
- de moyens de dérivation (128, 130) pour la dérivation d'un identifiant (104) à partir des données biométriques,
- de moyens de libération (120, 128, 130) pour la libération d'une fonction de carte à puce (116) avec l'identifiant,
- de moyens de communication (120, 144) pour rendre possible une communication entre un ordinateur (146) et la carte à puce pour l'utilisation de la fonction de la carte à puce par l'ordinateur,
dans lequel les moyens de dérivation sont conçus pour l'exécution d'une fonction unidirectionnelle afin de dériver l'identifiant à partir des données biométriques, où, dans le cas de la fonction unidirectionnelle, il s'agit d'une fonction HASH qui est prévue pour dériver une valeur HASH (102) sous forme d'identifiant à partir des données biométriques, où les moyens de dérivation présentent une zone de mémoire pour le stockage d'instructions de programme par lesquelles la dérivation de l'identifiant est mise en œuvre, et avec des moyens d'actualisation (160) pour la réception de données de mise à jour (154) pour la mise à jour des instructions de programme permettant d'améliorer ou de remplacer la fonction unidirectionnelle, où les données de mise à jour sont signées, et avec des moyens (158, 162) permettant la vérification de la signature (156) des données de mise à jour, où les moyens d'actualisation sont conçus de sorte que la mise à jour des instructions de programme à l'aide des données de mise à jour n'a lieu que si la signature est valide, où, un certificat est nécessaire pour la signature (156) des données de mise à jour, où le certificat contient une définition de droits laquelle fixe si l'instance en question, laquelle a signé les données de mise à jour est habilitée pour l'exécution d'une mise à jour des instructions de programme et où les moyens d'actualisation sont conçus de manière à ce que la mise à jour des instructions de programme n'ait lieu à l'aide des données de mise à jour que si la définition des droits dans le certificat permet l'exécution de la mise à jour.

2. Lecteur selon la revendication 1, doté de moyens de vérification (132) pour la vérification si la carte à puce se trouve dans un état de première utilisation, et de moyens de transfert (134) pour le transfert de la carte à puce dans un état d'utilisation à l'aide de l'identifiant, lorsque l'état de première utilisation de la carte à puce est présent.

3. Lecteur selon la revendication 2, dans lequel les moyens de transfert sont conçus de sorte que l'identifiant est transmis en tant qu'identifiant initial à la carte à puce, lorsque son état de première utilisation a été constaté afin de transférer la carte à puce de l'état de première utilisation à l'état d'utilisation.

4. Lecteur selon la revendication 2 ou la revendication 3, doté d'un dispositif d'affichage (140) pour l'affichage temporaire de l'identifiant.

5. Lecteur selon l'une des revendications précédentes, doté d'une zone de mémoire pour le stockage d'un certificat racine d'une infrastructure de clé publique, où les moyens de vérification de la signature sont conçus pour l'accès au certificat racine afin d'exécuter la vérification de la signature.

6. Lecteur selon l'une des revendications précédentes, dans lequel les moyens de détection présentent au moins un premier capteur (122.1) pour la détection d'une première caractéristique biométrique et un deuxième capteur (122.2) pour la détection d'une deuxième caractéristique biométrique, où le premier capteur est associé à un premier type de carte à puce et le deuxième capteur est associé à un deuxième type de carte à puce, et avec des moyens de questionnement (168) pour le questionnement du type de carte à puce de la carte à puce, où les moyens de détection sont conçus de sorte que le premier capteur, ou le deuxième capteur, est choisi en fonction du type de carte à puce de la carte à puce pour la détection des données biométriques.

7. Lecteur selon la revendication 6, dans lequel une première fonction unidirectionnelle (130.1) est associée au premier capteur et dans lequel une deuxième fonction unidirectionnelle (130.2) est associée au deuxième capteur, où les moyens de dérivation sont conçus de manière à ce que la première fonction unidirectionnelle est employée pour la dérivation de l'identifiant lorsque la détection des données biométriques a eu lieu par le premier capteur, et que la deuxième fonction unidirectionnelle est employée pour la dérivation de l'identifiant lorsque la détection des données biométriques a eu lieu par le deuxième capteur.

8. Lecteur selon l'une des revendications précédentes, doté d'un clavier (142) permettant la saisie d'un nouvel identifiant, où les moyens de dérivation sont conçus pour la dérivation de l'identifiant à partir d'une combinaison des données biométriques et du nouvel identifiant.

9. Lecteur selon l'une des revendications précédentes, doté d'un clavier permettant la saisie d'une clé personnelle de déverrouillage PUK pour la libération de la carte à puce pour un identifiant bloqué temporairement.

10. Système informatique doté
- d'un ordinateur (146),
- d'un lecteur (118) selon l'une des revendications précédentes, où les moyens de communication du lecteur sont connectés à l'ordinateur,
- d'une carte à puce (100), où une fonction de carte à puce de la carte à puce peut être libérée par la saisie de l'identifiant dans la carte à puce.

11. Système informatique selon la revendication 10, dans lequel la carte à puce présente un compteur d'opérations erronées de sorte que la carte à puce passe dans un état bloqué après qu'un nombre maximal d'opérations erronées ait été atteint.

12. Procédé de libération d'une fonction de carte à puce (116) d'une carte à puce (100) avec les étapes suivantes :
- la détection de données biométriques (126) d'un utilisateur à l'aide d'un lecteur de carte à puce (118),
- la dérivation d'un identifiant (104) à partir des données biométriques par des moyens de dérivation (128, 130) du lecteur de carte à puce, où les moyens de dérivation sont conçus pour l'exécution d'une fonction unidirectionnelle afin de dériver l'identifiant à partir des données biométriques, où, dans le cas de la fonction unidirectionnelle, il s'agit d'une fonction HASH qui est prévue pour dériver une valeur HASH (102) sous forme d'identifiant (104) à partir des données biométriques, où les moyens de dérivation présentent une zone de mémoire pour le stockage d'instructions de programme par lesquelles la dérivation de l'identifiant est mise en œuvre,
- la transmission de l'identifiant du lecteur de carte à puce vers la carte à puce pour la libération de la fonction de carte à puce afin de rendre possible une utilisation de la fonction de carte à puce par un ordinateur (146) connecté au lecteur,
avec les nouvelles étapes suivantes :
- la réception de données de mise à jour (154) pour la mise à jour des instructions de programme permettant d'améliorer ou de remplacer la fonction unidirectionnelle, où les données de mise à jour sont signées,
- la vérification de la signature (156) des données de mise à jour, où les moyens d'actualisation sont conçus de sorte que la mise à jour des instructions de programme à l'aide des données de mise à jour n'a lieu que si la signature est valide,
- la vérification d'un certificat correspondant à la signature (156) des données de mise à jour, où le certificat contient une définition de droits laquelle fixe si l'instance en question, laquelle a signé les données de mise à jour, est habilitée pour l'exécution d'une mise à jour des instructions de programme et où la mise à jour des instructions de programme n'a lieu à l'aide des données de mise à jour que si la définition des droits dans le certificat permet l'exécution de la mise à jour,
- la mise à jour des instructions de programme à l'aide des données de mise à jour dans le cas où la signature est valide et la définition des droits dans le certificat permet l'exécution de la mise à jour.

13. Procédé selon la revendication 12, avec les nouvelles étapes suivantes :
- la vérification si la carte à puce se trouve dans un état de première utilisation,
- le transfert de la carte à puce de l'état de première utilisation dans un état d'utilisation par la transmission de l'identifiant du lecteur vers la carte à puce.

14. Procédé selon la revendication 12 ou la revendication 13, dans lequel l'identifiant est affiché temporairement après sa dérivation sur un dispositif d'affichage du lecteur.

15. Procédé selon l'une des revendications précédentes, dans lequel les données biométriques sont effacées après la dérivation de l'identifiant à partir d'une mémoire de travail du lecteur.

16. Produit-programme informatique, notamment support de stockage numérique avec des instructions exécutables pour l'exécution d'un procédé selon l'une des revendications 12 à 13.
